# FASCICULE DE BREVET EUROPEEN

(11) **EP 0 812 649 B1**
(45) Date de publication et mention de la délivrance du brevet: **31.07.2002**
(21) Numéro de dépôt: 97401325.2
(22) Date de dépôt: 12.06.1997
(51) Int. Cl.: B23P 15/04, B21D 26/02, B21D 53/78

(54) **Procédé de fabrication d'une aube creuse de turbomachine et presse-four à multiple effet utilisée dans sa mise en oeuvre**
Verfahren zur Herstellung einer hohlen Turbinenschaufel und mehrstufiger Druckofen zur Durchführung des Verfahrens
Method of producing a hollow turbine blade and multiple effect furnace-press for carrying out the method

(30) Priorité: 13.06.1996 FR 9607329
(43) Date de publication de la demande: 17.12.1997
(73) Titulaire: SNECMA MOTEURS, 75015 Paris (FR)
(72) Inventeur: Bergue, Jean-Pierre Serges, 95230 - Soisy/Montmorency (FR); Bichon, Mathieu Philippe Albert, 95120 - Ermont (FR); Lacuisse, Jean-François Georges Julien, 95100 - Argenteuil (FR); Lorieux, Alain Georges Henri, 95110 - Sannois (FR)

(56) Documents cités:
- EP-A- 0 700 738
- WO-A-81/02128
- GB-A- 2 096 513

## Description

La présente invention concerne un procédé de fabrication d'une aube creuse de turbomachine, ainsi qu'une presse-four à multiple effet utilisée dans ce procédé.

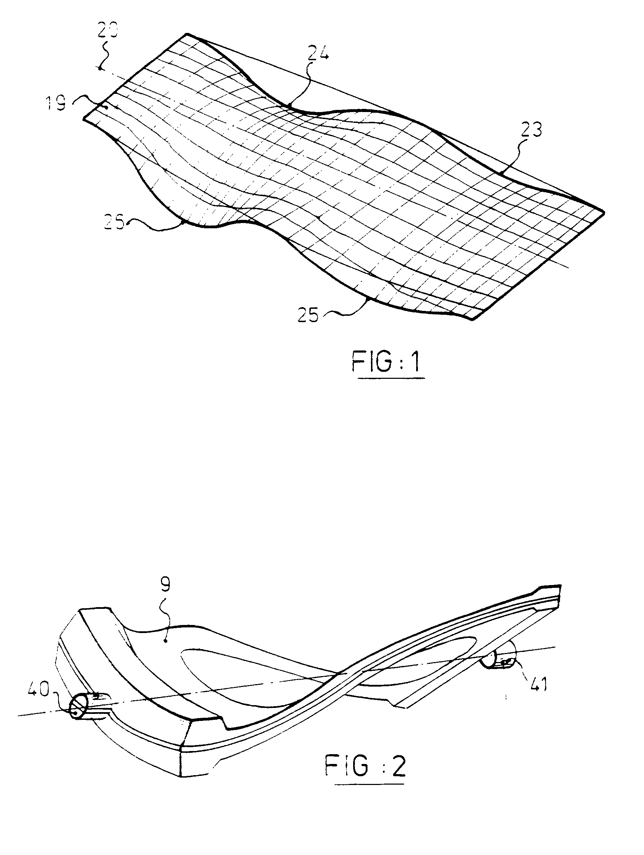

Les avantages découlant de l'utilisation d'aubes à grande corde pour les turbomachines sont apparus notamment dans le cas des aubes de rotor de soufflante des turboréacteurs à double flux. Ces aubes doivent répondre à des conditions sévères d'utilisation et posséder notamment des caractéristiques mécaniques suffisantes associées à des propriétés antivibratoires et de résistance aux impacts de corps étranger. L'objectif de vitesses suffisantes en bout d'aube a en outre amené à rechercher une réduction des masses. Ce but est notamment atteint par l'utilisation d'aubes creuses.
EP-A-0 700 738 décrit un procédé de fabrication d'une aube creuse de turbomachine, notamment une aube de rotor de soufflante à grande corde. Il est connu dans ce cas selon une première étape (a) de réaliser sur un système de Conception et Fabrication Assistées par Ordinateur / CFAO une simulation numérique, à partir de la définition géométrique d'une aube à obtenir, consistant à calculer pour les pièces constitutives de l'aube, de part et d'autre de la fibre centrale, les longueurs des fibres en fonction de leur position par rapport à l'axe 20 de la pièce 19, comme représentée sur la figure 1, les pièces étant mises à plat. On réalise également à ce stade une simulation numérique d'une opération de mise en forme de pièces par vrillage à comparer au résultat final. Le procédé de fabrication connu selon EP-A-0 700 738 prévoit le découlé opératoire général selon les étapes décrites dans le préambule de la revendication 1.

Un des buts de l'invention est de permettre de réaliser au cours du découlé opératoire ci-dessus une opération supplémentaire de mise en forme des pièces par vrillage sans risque de provoquer des ondulations de type flambage suivant la fibre centrale. Ces ondulations sont générées par des contraintes de compression induites lors de l'allongement des fibres latérales par suite des différences de longueur entre la pièce à plat de départ et la pièce vrillée.
Le procédé de fabrication d'une aube creuse de turbomachine comportant une opération conforme à l'invention de mise en forme de pièce en utilisant une presse-four à multiple effet conforme à l'invention permet d'éviter les inconvénients des procédés connus antérieurs et d'obtenir des aubes présentant des caractéristiques géométriques et mécaniques améliorées et optimisées dans les conditions d'utilisation, en garantissant une qualité répétitive tout en facilitant les conditions de fabrication au moindre coût.
Le procédé de fabrication d'une aube creuse de turbomachine conforme à l'invention comporte une opération de formage à chaud d'un élément destiné à la fabrication de l'aube par mise en forme isotherme dudit élément en alliage de titane du type TA6V sous presse, à une température comprise entre 700° et 940°C, sous l'action d'au moins deux poinçons et d'un serre-flanc s'exerçant sur l'élément placé sur une empreinte de formage, en assurant une vitesse de déformation contrôlée de manière à obtenir une mise à longueur des fibres de l'élément c'est à dire les allongements des différentes fibres de l'élément avec une répartition contrôlée de ces fibres de part et d'autre de la fibre neutre.

Il est connu d'utiliser pour réaliser des opérations de formage à chaud des moyens particuliers comportant une enceinte de chauffage associée à un moyen de chauffage, une structure de base de presse associée à un ensemble de puissance à vérins multiples et un outillage de formage.
Ces moyens connus se révèlent toutefois insuffisamment adaptés pour la réalisation de l'opération de formage à chaud nécessitée par le procédé de fabrication d'une aube creuse de turbomachine conforme à l'invention. Une presse-four à multiple effet de formage à chaud d'un élément destiné à la fabrication d'une aube creuse de turbomachine suivant ledit procédé est caractérisée en ce que la structure de base de presse composée d'une plaque métallique inférieure et d'une plaque métallique supérieure reliées par des colonnes intégrant des tirants précontraints enveloppe ladite enceinte de chauffage, que l'outillage de formage est composé d'une semelle inférieure intégrant une empreinte de formage limitée à chaque extrémité respectivement par une encoche, d'un serre-flanc supérieur maintenant la pièce en cours de déformation et d'au moins deux poinçons supérieurs, serre-flanc et poinçons étant déplaçables au moyen desdits vérins.
D'autres caractéristiques et avantages de l'invention seront mieux compris à la lecture de la description qui va suivre d'un mode de réalisation de l'invention, en référence aux dessins annexés sur lesquels :
- la figure 1 qui a été précédemment décrite représente schématiquement les résultats d'une simulation numérique d'une opération de mise à longueur des fibres à effectuer sur les pièces constitutives de l'aube creuse assemblée obtenue par le procédé conforme à l'invention ;
- la figure 2 représente une vue en perspective de l'ensemble soudé de l'aube creuse après vrillage ;
- la figure 3 représente selon une vue schématique en coupe l'ensemble de presse-four à multiple effet conforme à l'invention utilisée dans le procédé de fabrication d'une aube creuse de turbomachine ;
- la figure 4 représente selon une vue schématique en coupe transversale l'ensemble de presse-four à multiple effet représenté sur la figure 3 ;
- la figure 5 représente un détail de la liaison entre l'ensemble de puissance et une barre de transmission de l'ensemble de presse-four représenté sur les figures 3 et 4 ;
- la figure 6 représente un détail analogue à celui de la figure 5 de la liaison entre une barre de transmission et le serre-flanc ou un poinçon de l'ensemble de presse-four représenté sur les figures 3 et 4 ;
- la figure 7 représente selon une vue schématique en perspective le serre-flanc de l'ensemble de presse-four représenté sur les figures 3 et 4 ;
- la figure 8 représente une vue schématique de la mise en place des pions de centrage de l'outillage par rapport à l'ensemble de presse-four ;
- la figure 9 représente selon une vue schématique en perspective l'outillage de formage disposé à l'intérieur de l'ensemble de presse-four représenté sur les figures 3 et 4 ;
- la figure 10 représente selon une vue schématique en perspective d'un outillage de formage utilisé pour une opération de vrillage après mise à longueur des fibres ;
- la figure 11 représente une vue schématique d'un exemple de dispositif de chargement et déchargement permettant la desserte de l'ensemble de four-presse représenté sur les figures 3 et 4.

On appellera élément destiné à la fabrication d'une aube creuse de soufflante de turbomachine telle que 9, représentée sur la figure 2 à un stade intermédiaire de fabrication, dans l'application préférentielle qui est faite de l'invention, soit une peau primaire forgée destinée à constituer la surface d'intrados ou d'extrados de l'aube, soit une tôle centrale destinée à former les raidisseurs reliant les peaux d'intrados et d'extrados de l'aube, soit un ensemble soudé comportant les peaux externes et au moins une tôle centrale de l'aube, soit un ensemble non soudé et pré-assemblé comportant les peaux externes et au moins une tôle centrale de l'aube, soit un ensemble soudé comportant une peau d'intrados et une peau d'extrados. Dans la description qui va suivre, l'exemple non limitatif retenu concerne un ensemble soudé 9 dans une étape de fabrication d'une aube creuse de soufflante à grande corde pour turbomachine, cet exemple correspondant à des conditions économiques avantageuses d'application de l'invention.

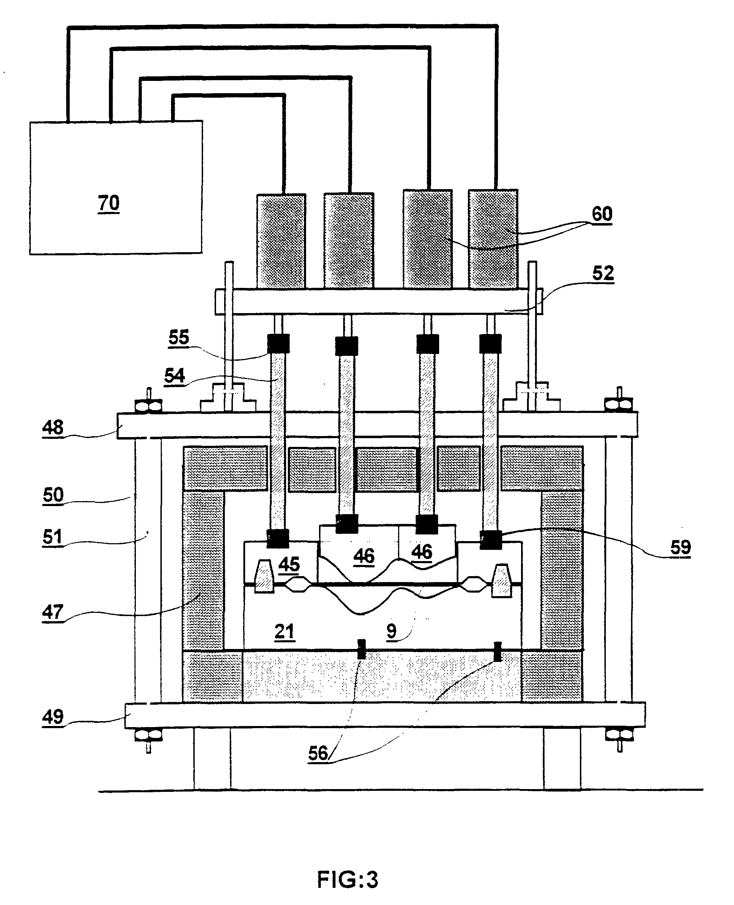

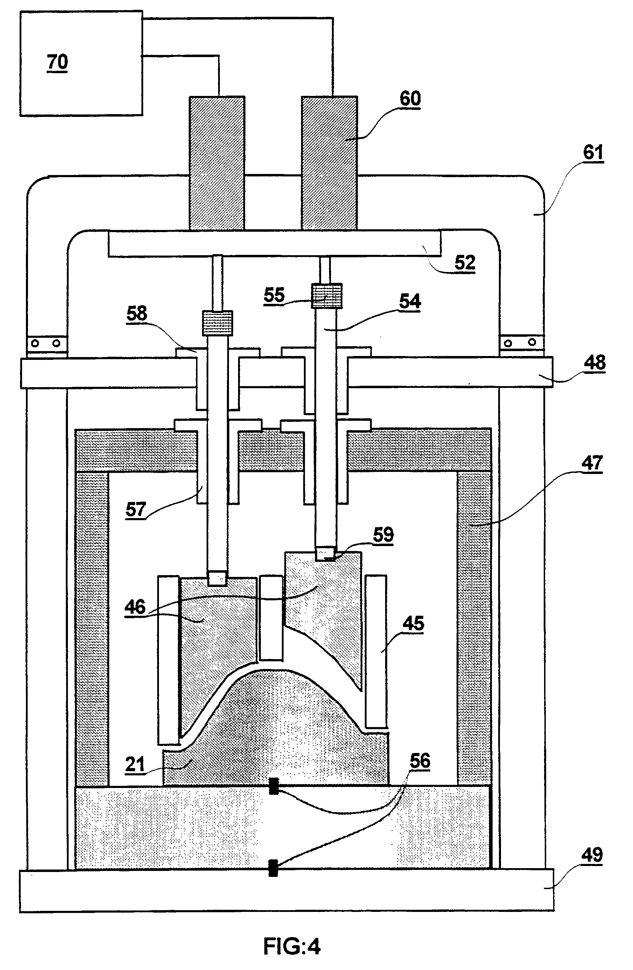

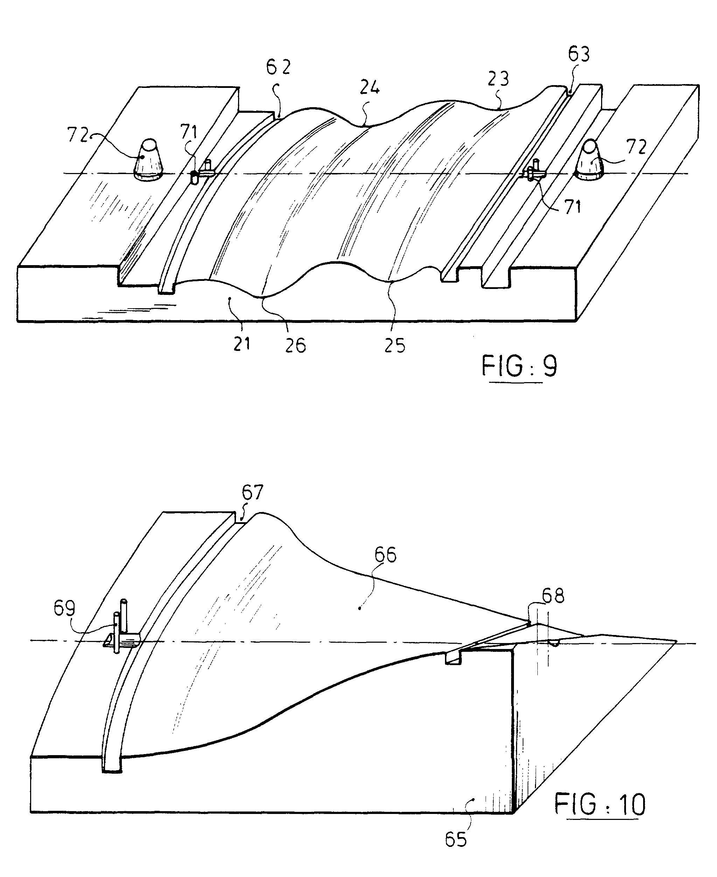

Une opération préalable de simulation numérique est effectuée sur un système de Conception et Fabrication Assistées par Ordinateur / CFAO, comme il est connu en soi et notamment par EO-A-0 700 738 précédemment cité. Cette simulation vise à conserver de part et d'autre de la fibre neutre les longueurs des fibres en fonction de leur position par rapport à l'axe 20 de la pièce 19, comme représenté sur la figure 1. La maîtrise visée des allongements de fibres permet d'évaluer l'amincissement de l'ensemble soudé en fonction de la répartition des taux d'allongements desdites fibres. Un calcul par traitement informatique permet alors de compenser les variations d'épaisseur des peaux primaires afin d'obtenir l'épaisseur finale désirée après toutes les étapes du procédé de fabrication.
Sur la base des éléments ainsi prédéterminés, le procédé de fabrication d'une aube creuse de turbomachine et, dans l'exemple décrit, une aube de rotor de soufflante à grande corde 9 comporte, conformément à l'invention, une opération remarquable de formage à chaud de l'ensemble soudé 9 en alliage de titane, du type TA6V consistant en une mise en forme isotherme de l'ensemble soudé, sous presse, à une température comprise entre 700° et 940°C, sous l'action d'au moins deux poinçons et d'un serre-flanc s'exerçant sur l'ensemble soudé placé sur une empreinte de formage, en assurant une vitesse de déformation contrôlée de manière à obtenir une mise à longueur des fibres de chaque élément de l'ensemble c'est à dire les allongements des différentes fibres de chaque élément avec une répartition contrôlée de ces fibres de part et d'autre de la fibre centrale.
De manière préférentielle, l'opération est effectuée en conservant l'ensemble soudé dans les conditions de superplasticité de l'alliage de titane utilisé. Les essais réalisés sur un alliage de titane du type TA6V ont ainsi été effectués entre 880°C et 940°C et la vitesse de déformation correspondante a été choisie pour respecter cette condition de superplasticité, permettant ainsi d'éviter toute trace de striction sur un élément de l'ensemble soudé 9.
En fonction du résultat final de forme d'aube à obtenir suivant les applications particulières, l'opération dite de mise à longueur des fibres par formage à chaud peut être précédée par une opération de cambrage appliquée au pied et dans la zone de bas de pale de l'aube.
En d'autre cas, en fonction des moyens utilisés et/ou du résultat à obtenir, une opération unique de formage à chaud peut permettre d'obtenir à la fois le cambrage du pied et de la zone de bas de pale de l'aube et la mise à longueur des fibres.
Selon les mêmes critères d'applications particulières et de résultat final de forme d'aube à obtenir, l'opération de mise à longueur des fibres de l'ensemble soudé par formage isotherme peut être suivie par une opération de gonflage sous pression de gaz et formage superplastique assurant les profils recherchés de l'aube.
En variante, après l'opération de mise à longueur des fibres, une opération complémentaire de mise en forme par vrillage et calibrage peut être nécessaire. Dans ce cas et de manière avantageuse, cette opération de vrillage peut être réalisée en enchaînement et sans refroidissement intermédiaire de l'ensemble soudé 9 à la suite de l'opération de mise à longueur des fibres.
La presse-four à multiple effet de formage à chaud représentée sur les figures 3 et 4 est utilisée pour la réalisation de l'opération de mise à longueur des fibres de l'élément d'aube creuse 9 de turbomachine dans le procédé de fabrication conforme à l'invention et qui vient d'être décrite.
Cette presse-four est constituée de deux parties distinctes : en partie inférieure une enceinte de chauffage 47, un outillage de mise à longueur fibres 21 et la structure de base de la presse, en partie supérieure l'ensemble de puissance composé d'autant de vérins 60 que nécessaire en fonction du type de formage. Cet ensemble de puissance peut être raccordé à la partie basse par un montage en arcade 61, tel schématisé sur la figure 4.
La structure de base de la presse est composée de deux plaques métalliques 48, 49 dimensionnées en fonction des efforts à fournir, reliées par quatre colonnes 50 intégrant chacune un tirant précontraint 51. A l'intérieur de cette structure, un four 47 permet le chauffage à une température comprise entre 700° et 940° de l'outillage 21 de mise à longueur fibres et de la pièce à former, notamment l'ensemble soudé 9 de l'aube creuse de turbomachine.
L'outillage de mise à longueur fibres est constitué de trois parties distinctes : une semelle 21 intégrant l'empreinte de mise à longueur fibres, un serre-flanc 45 permettant le cambrage du pied et d'une partie adjacente de la pale, puis le maintien de l'ensemble soudé 9 au cours de l'allongement des fibres. L'allongement est obtenu par au moins deux poinçons 46, au nombre de trois dans l'exemple représenté sur les dessins.
Dans l'outillage de formage représenté sur la figure 9, la semelle 21, en alliage réfractaire ou en matériau céramique intègre l'empreinte de mise à longueur fibres réalisée en CFAO. Cette empreinte comprend, les parties massives du pied 62 et du bout de la pale 63, une ou plusieurs ondes 23-24-25-26 correspondant aux allongements désirés de l'élément de la figure 1 et les tourillons 40-41 de l'ensemble soudé 9 de la figure 2. De plus la semelle comporte des colonnes de guidage 72 pour assurer le positionnement du serre flanc 45 et des colonnes 71 dans le but de parfaitement positionner l'ensemble soudé sur la semelle avant formage.

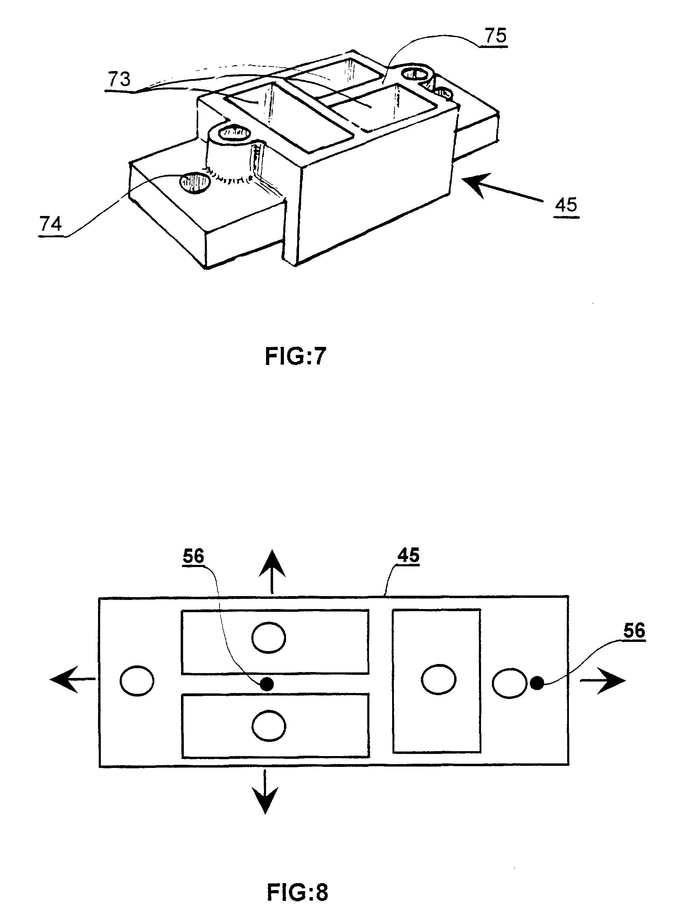

Le serre-flanc 45 représenté sur la figure 7, est formé d'une pièce de fonderie monobloc constituée d'autant d'alvéoles 73 que de poinçons. Il comporte également deux alésages 74 afin d'assurer le parfait positionnement relatif du serre flanc et des poinçons par rapport à la semelle 21 en recevant les colonnes de guidage 72. De plus la cloison centrale 75 formée par les deux alvéoles latérales, assure pendant le cycle de formage le maintien de l'ensemble soudé 9 suivant la fibre centrale comme le montre la figure 4. Le serre flanc 45 comporte aussi l'empreinte curviligne ou rectiligne du pied 62 prolongée d'une partie de la pale et en bout de pale l'empreinte 63. L'empreinte 62 permet aussi le cambrage du pied et la partie adjacente de la pale avant d'immobiliser l'ensemble soudé 9 pendant le cycle de mise à longueur.

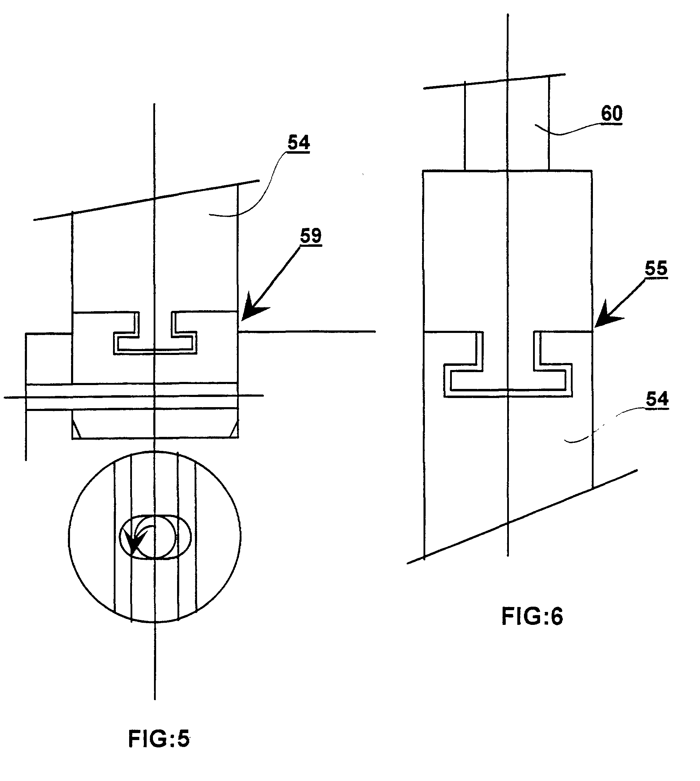

La semelle 21 est fixée ou simplement posée sur la sole du four 47. Le serre-flanc 45 et les poinçons 46, mobiles, sont reliés à la partie supérieur de puissance par des barres de transmission 54 équipées de liaisons en Té 55 et 59 comme détaillées sur les figures 5 et 6 capables d'encaisser les dilatations différentielles au niveau du serre-flanc 45 et des poinçons 46, puis de l'accrochage aux nez de vérins 60. Ces liaisons en forme de Té assurent aussi une barrière thermique entre les nez des vérins et les barres de transmission. De plus les liaisons 59 au niveau du serre-flanc 45 et des barres de transmission 54 assurent par une rotation de 90° le déverrouillage des barres de transmission 54 afin de permettre le chargement de l'outillage de mise à longueur fibres de la figure 8 dans l'enceinte chauffante ou four 47.
Afin de rendre unidirectionnelles les dilatations dans le but de simplifier les liaisons en Té, le four 47 et l'outillage 21 de mise à longueur fibres sont judicieusement positionnés par rapport à la partie inférieure de la presse au moyen des pions de centrage 56 comme le montre les figures 3 et 4 et le détail de la figure 8.
Ces pions 56 sont positionnés suivant la répartition des poinçons 46, d'une manière générale suivant l'axe longitudinal de la presse, puis en fonction du nombre de poinçons, comme schématiquement représenté sur la figure 8.
Le guidage de l'ensemble des barres de transmission 54 est assuré par des bagues 58 en composé céramique emmanchées dans la plaque métallique supérieure 48 de la partie inférieure de la presse. La portée de ces bagues 58 est suffisamment longue de manière à guider parfaitement l'ensemble des barres de transmission 54 traversant la voûte supérieure du four.
Des manchons préformés 57 en composés fibreux, équipés de tubes métalliques en matériau réfractaire assurent le refroidissement des barres de transmission 54 dans le cas d'une utilisation temporaire.
En utilisation prolongée les barres de transmission 54 sont équipés de canaux permettant une circulation d'un fluide de refroidissement.

Le système de régulation de la presse assure un contrôle fin de la vitesse des poinçons 46 afin de rester en permanence dans le domaine superplastique du matériau tel que l'alliage de titane du type TA6V utilisé pour la réalisation des aubes creuses de turbomachine, en assurant une déformation à vitesse lente. Les vitesses de déformation imposées sont obtenues au moyen d'un ensemble hydraulique 70 adapté au besoin qui permet une gamme de vitesse comprise entre 50mm s⁻ ¹ et 0.05mm s⁻¹.

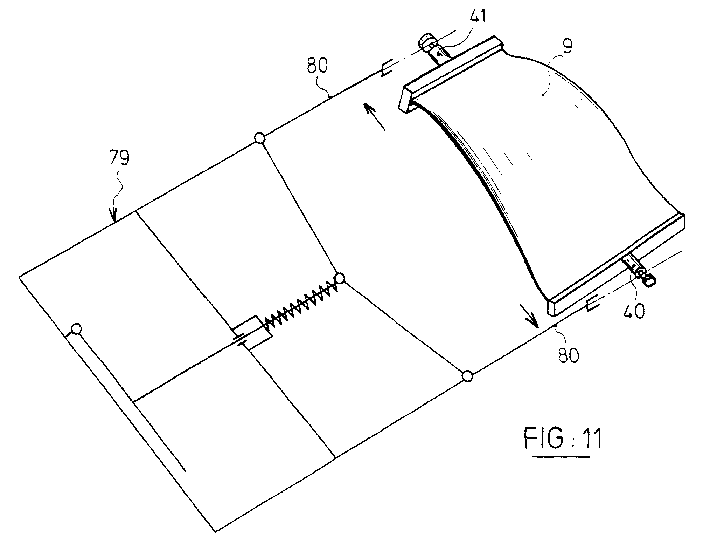

On va maintenant décrire le déroulé d'une opération de mise en forme par mise à longueur des fibres d'un ensemble soudé 9 d'aube creuse de turbomachine, conformément à l'invention.
L'enceinte chauffante 47 est maintenue à une température supérieure à 880°C pour une application sur un alliage TA6V, le serre-flanc 45 et les poinçons 46 sont en position haute et assurent un espace afin de permettre l'introduction de l'ensemble soudé sur la semelle 21, au moyen d'un dispositif de chargement 79 représenté schématiquement sur la figure 11, équipé de deux pinces 80 maintenant l'ensemble soudé 9 par les tourillons 40 et 41 en lui appliquant un effort de traction longitudinal.
L'ensemble soudé est positionné sur la semelle 21 par l'intermédiaire des tourillons 40-41 guidés verticalement par des colonnes cylindriques 71 de l'embase. A ce stade l'ensemble soudé 9 repose sur la semelle 21, jusqu'à ce qu'il ait atteint la température de formage. Dès que la température est atteinte le processus de formage s'enclenche : descente simultanée du serre-flanc 45 et des poinçons 46, jusqu'à une position prédéterminée en vitesse rapide, puis arrêt des poinçons 46. Le serre-flanc 45 continue sa descente en vitesse de formage superplastique jusqu'à la position de fin de course qui autorise la mise à longueur fibres qui est alors réalisée par la descente d'un ou plusieurs poinçons 46 simultanément ou séparément. Dès que la position fin de course est atteinte par l'ensemble des poinçons 46, le serre-flanc et les poinçons remontent en position haute. Le déchargement de l'ensemble soudé formé s'effectue à l'aide du dispositif 79 précédemment décrit qui grâce à un effort de traction prédéfini évite le flambage de l'ensemble soudé 9 par son propre poids.
Dans le cas où une opération de mise en forme par vrillage et calibrage est nécessaire après l'opération de mise à longueur des fibres, l'ensemble soudé 9 peut être placé entre deux outillages de forme adéquate à température isotherme, comprise entre 700°C et 940°C dans l'application à un ensemble soudé en alliage de titane du type TA6V. Un exemple de réalisation d'outillage représenté sur la figure 10 comporte une semelle 65 et une empreinte de formage 66 limitée à chaque extrémité par des rainures 67 et 68. L'ensemble soudé 9 est positionné dans l'outillage par l'intermédiaire des tourillons 40 et 41 guidés verticalement par des colonnes cylindriques 69 de manière à maintenir pendant toute la déformation la fibre centrale matérialisée par les tourillons 40 et 41 dans un plan vertical compris entre les colonnes 69 comme représenté sur les figures 2 et 10.

## Revendications

1. Procédé de fabrication d'une aube creuse de turbomachine, notamment une aube (9) de rotor de soufflante à grande corde, comportant les étapes suivantes :
- (a) à partir de la définition d'une aube à obtenir, étude en utilisant les moyens de Conception et Fabrication Assistés par Ordinateur / CFAO et réalisation d'une simulation numérique de la mise à plat des pièces constitutives de l'aube ;
- (b) forgeage sur presse des pièces primaires par matriçage ;
- (c) usinage des pièces primaires ;
- (d) dépôt de barrières de diffusion suivant un motif prédéfini ;
- (e) assemblage des pièces primaires suivi du soudage-diffusion en pression isostatique ;
- (f) gonflage sous pression de gaz et formage superplastique ;
- (g) usinage final,
comportant en outre une opération de formage à chaud d'un élément (9) destiné à la fabrication de l'aube, par mise en forme isotherme dudit élément (9) en alliage de titane, du type TA6V, sous presse, à une température comprise entre 700° et 940°C, **caractérisé en ce que** ladite opération de formage à chaud est effectuée sur une presse-four à multiple effet, sous l'action d'au moins deux poinçons (46) et d'un serre-flanc (45) bloquant l'élément (9) placé sur une empreinte de formage (21), en assurant une vitesse de déformation contrôlée de manière à obtenir une mise à longueur des fibres de l'élément c'est à dire les allongements des différentes fibres de l'élément avec une répartition contrôlée de ces fibres de part et d'autre de la fibre centrale.

2. Procédé de fabrication d'une aube creuse selon la revendication 1 dans lequel ladite opération de formage à chaud est effectuée entre 880° et 940°C, domaine où la température et la vitesse de déformation choisie correspondent au domaine de superplasticité de l'alliage de titane utilisé, de manière à éviter les risques de striction.

3. Procédé de fabrication d'une aube creuse selon l'une des revendications 1 ou 2 dans lequel ladite opération de mise à longueur des fibres par formage à chaud est effectuée sur chaque pièce primaire forgée.

4. Procédé de fabrication d 'une aube creuse selon, l'une des revendications 1 ou 2 dans lequel ladite opération de mise à longueur des fibres par formage à chaud est effectuée sur une tôle destinée à former la partie interne de l'aube.

5. Procédé de fabrication d'une aube selon l'une des revendications 1 ou 2 dans lequel ladite opération de mise à longueur des fibres par formage à chaud est effectuée sur un ensemble plat composé des pièces constitutives de l'aube non soudées.

6. Procédé de fabrication d'une aube creuse selon l'une des revendications 1 ou 2 dans lequel ladite opération de mise à longueur des fibres par formage à chaud est effectuée sur un ensemble plat obtenu après assemblage des pièces primaires suivi du soudage-diffusion.

7. Procédé de fabrication d'une aube creuse selon l'une des revendications 1 à 6 dans lequel ladite opération de mise à longueur des fibres par formage à chaud est précédée par une opération de cambrage dans la zone de raccordement du pied et de la zone de bas de pale de l'aube.

8. Procédé de fabrication d'une aube creuse selon l'une des revendications 1 à 6 dans lequel ladite opération de formage à chaud permet de réaliser le cambrage du pied de l'aube et la zone de bas de pale de l'aube, puis la mise à longueur des fibres dans le même déroulé opératoire.

9. Procédé de fabrication d'une aube creuse selon l'une des revendications 1 à 8 dans lequel ladite opération de mise à longueur des fibres par formage à chaud est suivie en enchaînement et sans refroidissement intermédiaire par une opération de mise en forme par vrillage.

10. Procédé de fabrication d'une aube creuse selon l'une des revendications 1 à 9 dans lequel lors du chargement et du déchargement de l'élément d'aube sur ladite presse-four un maintien en traction de l'élément entre ses deux extrémités est assuré.

11. Presse-four à multiple effet de formage à chaud d'un élément (9) destiné à la fabrication d'une aube creuse de turbomachine suivant le procédé des revendications 1 à 10 comprenant une enceinte de chauffage (47) associée à un moyen de chauffage, une structure de base de presse (48, 49) associée à un ensemble de puissance (60) à vérins multiples et un outillage de formage (21) **caractérisée en ce que** la structure de base de presse composée d'une plaque métallique inférieure (49) et d'une plaque métallique supérieure (48) reliées par des colonnes (50) intégrant des tirants (51) précontraints enveloppe ladite enceinte de chauffage (47), que l'outillage de formage est composé d'une semelle inférieure (21) intégrant une empreinte de formage limitée à chaque extrémité respectivement par une encoche (62, 63), d'un serre-flanc supérieur (45) maintenant la pièce en cours de déformation et d'au moins deux poinçons supérieurs (46), serre-flanc (45) et poinçons (46) étant déplaçables au moyen desdits vérins (60).

12. Presse-four à multiple effet de formage à chaud d'un élément destiné à la fabrication d'une aube creuse de turbomachine selon la revendication 11 dans laquelle le serre-flanc et les poinçons sont reliés à l'ensemble de puissance par des barres de transmission munis de liaisons en Té, à chaque extrémité.

13. Presse-four à multiple effet de formage à chaud d'un élément (9) destiné à la fabrication d'une aube creuse de turbomachine selon l'une des revendications 11 ou 12 dans laquelle ladite semelle inférieure (21) comporte à chaque extrémité des colonnes cylindriques (71) guidant verticalement des tourillons (40, 41) disposés aux extrémités de l'élément d'aube (9) et en outre des colonnes de guidage (72) du serre-flanc (45).

14. Presse-four à multiple effet de formage à chaud d'un élément (9) destiné à la fabrication d'une aube creuse de turbomachine selon l'une quelconque des revendications 11 à 13 dans laquelle le serre-flanc (45) comporte des alvéoles (73) assurant le passage et le guidage des poinçons, (46) le maintien longitudinal de l'élément d'aube est assuré par une paroi (75) des alvéoles et lors du formage, un maintien de la partie centrale sur toute la longueur de l'élément d'aube assurant un blocage de la fibre centrale (20) est obtenu au moyen du serre-flanc (45).

## Patentansprüche

1. Verfahren zur Herstellung einer hohlen Turbotriebwerkschaufel, insbesondere einer Rotorschaufel (9) eines Gebläses mit großer Weite, bestehend aus den folgenden Schritten:
- (a) ausgehend von der Definition einer herzustellenden Schaufel erfolgt die Entwicklung unter Verwendung von Mitteln zum rechnerunterstützten Entwerfen (CAD) und zur rechnergestützten Fabrikation (CAM) sowie eine numerische Simulation des Flachlegens der Bestandteile der Schaufel;
- (b) Schmieden der Rohlinge auf der Presse,
- (c) Bearbeiten der Rohlinge;
- (d) Aufbringen von Diffusionswänden nach einem vorbestimmten Muster;
- (e) Zusammensetzen der Rohlinge, gefolgt vom Diffusionsschweißen unter isostatischem Druck;
- (f) Aufblähen unter Gasdruck und superplastisches Formen;
- (g) Endbearbeitung,
wobei das Verfahren ferner einen Verfahrensschritt des Warmformens eines für die Herstellung der Schaufel vorgesehenen Elements (9) durch isothermes Formen dieses Elements (9) aus Titanlegierung des Typs TA6V in der Presse bei einer Temperatur von 700 °C bis 940 °C aufweist,
**dadurch gekennzeichnet,**
**dass** dieser Vorgang des Warmformens in einem mehrstufigen Druckofen unter Einwirkung von mindestens zwei Stauchstempeln (46) und einem Seitenhalter (45), der das auf einer Unterform (21) angeordnete Element (9) arretiert, ausgeführt wird, wobei eine kontrollierte Verformungsgeschwindigkeit dergestalt gewährleistet wird, dass die Fasern des Elements auf Länge gebracht werden bzw. die Streckung der einzelnen Fasern des Elements mit einer kontrollierten Verteilung dieser Fasern beiderseits der Zentralfaser erzielt wird.

2. Verfahren zur Herstellung einer hohlen Turbotriebwerkschaufel nach Anspruch 1, wobei der genannte Vorgang des Warmformens bei 880 °C bis 940 °C ausgeführt wird, einem Temperaturbereich, in dem die Temperatur und die gewählte Verformungsgeschwindigkeit dem Bereich der Superplastizität der verwendeten Titanlegierung entsprechen, so dass die Gefahr der Querkontraktion vermieden wird.

3. Verfahren zur Herstellung einer hohlen Turbotriebwerkschaufel nach einem der Ansprüche 1 oder 2, wobei der genannte Vorgang des Streckens der Fasern durch Warmformen an jedem geschmiedeten Rohling ausgeführt wird.

4. Verfahren zur Herstellung einer hohlen Turbotriebwerkschaufel nach einem der Ansprüche 1 oder 2, wobei dieser Vorgang des Streckens der Fasern durch Warmformen an einem Blech ausgeführt wird, das den inneren Teil der Schaufel bilden soll.

5. Herstellung einer hohlen Turbotriebwerkschaufel nach einem der Ansprüche 1 oder 2, wobei dieser Vorgang des Streckens der Fasern durch Warmformen an einer flachen Gesamtanordnung ausgeführt wird, die sich aus den nicht verschweißten Bestandteilen der Schaufel zusammensetet.

6. Herstellung einer hohlen Turbotriebwerkschaufel nach einem der Ansprüche 1 oder 2, wobei dieser Vorgang des Streckens der Fasern durch Warmformen an einer flachen Gesamtanordnung ausgeführt wird, die Ergebnis des Zusammensetzens der Rohlinge und des darauf folgenden Diffusionsschweißens ist.

7. Herstellung einer hohlen Turbotriebwerkschaufel nach einem der Ansprüche 1 bis 6, wobei diesem Vorgang des Streckens der Fasern durch Warmformen ein Biegevorgang in dem Anschlussbereich des Fußes und des unteren Blattbereichs der Schaufel vorausgeht.

8. Herstellung einer hohlen Turbotriebwerkschaufel nach einem der Ansprüche 1 bis 6, wobei dieser Vorgang des Warmformens es ermöglicht, das Biegen des Schaufelfußes und des unteren Schaufelblattbereichs und das Strecken der Fasern in dem gleichen Arbeitsablauf auszuführen.

9. Herstellung einer hohlen Turbotriebwerkschaufel nach einem der Ansprüche 1 bis 8, wobei auf diesen Vorgang des Streckens der Fasern durch Warmformen unmittelbar und ohne zwischenzeitliche Abkühlung ein Vorgang des Formens durch Verwinden folgt.

10. Herstellung einer hohlen Turbotriebwerkschaufel nach einem der Ansprüche 1 bis 9, wobei während des Belastens und Entlastens des Schaufelelements in dem genannten Druckofen gewährleistet wird, dass das Element zwischen seinen beiden Enden unter Zug gehalten wird.

11. Mehrstufiger Druckofen zum Warmformen eines für die Herstellung einer hohlen Turbotriebwerkschaufel vorgesehenen Elements (9) nach dem Verfahren der Ansprüche 1 bis 10, der einen Warmraum (47) in Verbindung mit einem Heizmittel, eine Presse-Grundkonstruktion (48,49) in Verbindung mit einer Krafteinheit (60) mit mehreren Zylindern sowie ein Formgebungswerkzeug (21) umfasst,
**dadurch gekennzeichnet,**
**dass** die Presse-Grundkonstruktion, die eine untere Metallplatte (49) und eine obere Metallplatte (48) aufweist, die durch Säulen (50) mit eingebauten, vorgespannten Spannstangen (51) miteinander verbunden sind, diesen Warmraum (47) umgibt, dass das Formgebungswerkzeug aus einer unteren Sohle (21) mit einem Formgebungsnest, das an jedem Ende durch eine Rille (62, 63) begrenzt wird, sowie aus einem oberen Seitenhalter (45), der das Werkstück während des Verformens hält, und aus mindestens zwei oberen Stauchstempeln (46) besteht, wobei Seitenhalter (45) und Stauchstempel (46) mittels der genannten Zylinder (60) verschiebbar sind.

12. Mehrstufiger Druckofen zum Warmformen eines für die Herstellung einer hohlen Turbotriebwerkschaufel vorgesehenen Elements nach Anspruch 11, wobei der Seitenhalter (45) und die Stauchstempel (46) durch Übertragungsstangen, die an jedem Ende mit T-Verbindungen versehen sind, mit der Krafteinheit (60) verbunden sind.

13. Mehrstufiger Druckofen zum Warmformen eines für die Herstellung einer hohlen Turbotriebwerkschaufel vorgesehenen Elements nach einem der Ansprüche 11 oder 12, wobei die genannte untere Sohle (21) an jedem Ende zylindrische Säulen (71) aufweist, die eine vertikale Führung für Drehzapfen (40, 41) bilden, die an den Enden des Schaufelelements (9) angeordnet sind, sowie Führungssäulen (72) für den Seitenhalter (45) aufweist.

14. Mehrstufiger Druckofen zum Warmformen eines für die Herstellung einer hohlen Turbotriebwerkschaufel vorgesehenen Elements nach einem der Ansprüche 11 bis 13, wobei der Seitenhalter (45) Waben (73) aufweist, die den Durchlass und die Führung der Stauchstempel (46) gewährleisten, wobei der Halt des Schaufelelements in Längsrichtung durch eine Wand (75) der Waben gewährleistet ist und der Halt des mittlenen Bereichs des Schaufelelements über dessen gesamte Länge, der eine Arretierung der Zentralfaser (20) gewährleistet, während des Formens mittels des Seitenhalters (45) erreicht wird.

## Claims

1. Method of producing a hollow turbomachine blade, particularly a large-chord fan rotor blade (9), comprising the following steps:
- (a) starting from the design of a blade to be obtained, carrying out a study using computer-aided design and manufacture (CAD/CAM) means and carrying out a numerical simulation of the development of the constituent parts of the blade;
- (b) drop-forging the primary parts using a press;
- (c) machining the primary parts;
- (d) depositing diffusion barriers in a predefined pattern;
- (e) assembling the primary parts followed by diffusion welding under isostatic pressure;
- (f) blowing under gas pressure and superplastic forming;
- (g) final machining,
further comprising an operation of hot-forming an element (9) intended for the manufacture of the blade, by isothermal forming of the said element (9), in titanium alloy of the TA6V type, in a press, at a temperature of between 700 and 940°C, **characterized in that** the said hot-forming operation is performed in a multiple-effect furnace-press under the action of at least two punches (46) and of a clamp (45) holding the element (9) placed on a forming cavity (21), ensuring a controlled rate of deformation so as to obtain a lengthening of the fibres of the element, that is to say the elongations of the various fibres of the element with a controlled distribution of these fibres on each side of the central fibre or axis.

2. Method of producing a hollow blade according to Claim 1, in which the said hot-forming operation is performed at between 880 and 940°C, in which domain the temperature and the chosen rate of deformation correspond to the superplastic domain of the titanium alloy used, so as to avoid the risk of necking.

3. Method of producing a hollow blade according to one of Claims 1 and 2, in which the said operation of lengthening the fibres by hot-forming is performed on each primary forging.

4. Method of producing a hollow blade according to one of Claims 1 and 2, in which the said operation of lengthening the fibres by hot-forming is performed on a metal sheet intended to form the internal part of the blade.

5. Method of producing a blade according to one of Claims 1 and 2, in which the said operation of lengthening the fibres by hot-forming is performed on a flat assembly made up of the unwelded constituent parts of the blade.

6. Method of producing a hollow blade according to one of Claims 1 and 2, in which the said operation of lengthening the fibres by hot-forming is performed on a flat assembly obtained after the primary parts have been assembled, followed by the diffusion welding.

7. Method of producing a hollow blade according to one of Claims 1 to 6, in which the said operation of lengthening the fibres by hot-forming is preceded by an operation of curving in the region where the root of the blade meets the bottom of the aerofoil section.

8. Method of producing a hollow blade according to one of Claims 1 to 6, in which the said hot-forming operation allows the root of the blade and the bottom of the aerofoil section to be curved, then allows the fibres to be lengthened in the same procedure.

9. Method of producing a hollow blade according to one of Claims 1 to 8, in which the said operation of lengthening the fibres by hot-forming is followed in sequence and without intermediate cooling by an operation of shaping by twisting.

10. Method of producing a hollow blade according to one of Claims 1 to 9, in which, when loading and unloading the blade element into and out of the said furnace-press, the element is kept in tension between its two ends.

11. Multiple-effect furnace-press for the hot-forming of an element (9) intended for the production of a hollow turbomachine blade according to the method of Claims 1 to 10 comprising a heating chamber (47) associated with a heating means, a press bottom structure (48, 49) associated with a power unit (60) with multiple rams and with forming tooling (21), **characterized in that** the press bottom structure made up of a metal bottom plate (49) and of a metal top plate (48), which plates are connected by columns (50) incorporating prestressed ties (51), envelopes the said heating chamber (47), **in that** the forming tooling is made up of a lower sole (21) incorporating a forming cavity limited at each respective end by a notch (62, 63), of a top clamp (45) holding the part while it is being deformed and of at least two upper punches (46), the clamp (45) and the punches (46) being movable by means of the said rams (60).

12. Multiple-effect furnace-press for the hot-forming of an element intended for the production of a hollow turbomachine blade according to Claim 11, in which the clamp and the punches are connected to the power unit by transmission bars fitted with Tee joints at each end.

13. Multiple-effect furnace-press for the hot-forming of an element (9) intended for the production of a hollow turbomachine blade according to one of Claims 11 and 12, in which the said bottom sole (21) comprises, at each end, cylindrical columns (71) vertically guiding journals (40, 41) arranged at the ends of the blade element (9) and also columns (72) for guiding the clamp (45).

14. Multiple-effect furnace-press for the hot-forming of an element (9) intended for the production of a hollow turbomachine blade according to any one of Claims 11 to 13, in which the clamp (45) has recesses (73) for the passage and guidance of the punches (46), the blade element is held longitudinally by a wall (75) of the recesses and, during forming, the central part is held over the entire length of the blade element immobilizing the central fibre or axis (20) by means of the clamp (45).
